(19) Europäisches Patentamt
European Patent Office
Office européen des brevets

(11) Publication number: **0 089 268**
**B1**

(12) **EUROPEAN PATENT SPECIFICATION**

(45) Date of publication of patent specification: **02.07.86**

(51) Int. Cl.$^4$: **A 01 N 47/12,** A 01 N 25/04 // (A01N47/12, 43:70)

(21) Application number: **83400451.7**

(22) Date of filing: **04.03.83**

(54) **Thiolcarbamate-triazine liquid herbicide composition.**

(30) Priority: **05.03.82 US 354980**
**28.02.83 US 468671**

(43) Date of publication of application:
**21.09.83 Bulletin 83/38**

(45) Publication of the grant of the patent:
**02.07.86 Bulletin 86/27**

(84) Designated Contracting States:
**AT BE CH DE FR GB IT LI NL**

(56) References cited:
**BE-A- 889 274**
**FR-A-2 079 285**
**GB-A- 719 360**
**US-A-3 796 562**

(73) Proprietor: **STAUFFER CHEMICAL COMPANY**
**Westport Connecticut 06880 (US)**

(72) Inventor: **Moucharafieh, Nadim Chamel**
**939 Lexington, 6**
**El Cerrito California 94530 (US)**

(74) Representative: **Mongrédien, André et al**
**c/o SOCIETE DE PROTECTION DES INVENTIONS**
**25, rue de Ponthieu**
**F-75008 Paris (FR)**

**EP 0 089 268 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the Invention

The following thiolcarbamate herbicides are known and correspond to the following general formula:

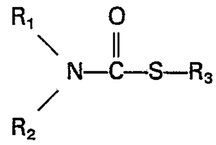

in which

$R_1$ is $C_1$—$C_6$ alkyl, $C_2$—$C_6$ alkenyl or $C_2$—$C_6$ alkynyl;

$R_2$ is $C_1$—$C_6$ alkyl, $C_2$—$C_6$ alkenyl, cyclohexyl or phenyl; or

$R_1$ and $R_2$ together with the nitrogen atom to which they are attached form a ring structure having from 4—10 carbon atoms, preferably, piperidino, hexamethyleneimino, decahydroquinolinyl, 2,5-dimethyl-piperidino, or 5-ethyl-2-methyl-piperidino;

$R_3$ is $C_1$—$C_6$ alkyl, $C_2$—$C_4$ alkenyl, benzyl, phenyl, halophenyl, methyl substituted phenyl or benzyl or $C_1$—$C_6$ haloalkyl. These thiolcarbamate compounds are described in U.S. Patent Nos. 2,913,327; 3,198,786; 3,185,720; 2,913,324; and 3,846,115.

These thiolcarbamates have been shown particularly effective in the control of grassy type weeds which interfere with the production of a wide variety of crops, e.g., barley, corn, lentils, peanuts, peas, potatoes, soybeans, spinach, tobacco and tomatoes.

Also the following s-triazine herbicides are known and correspond to the following general formula

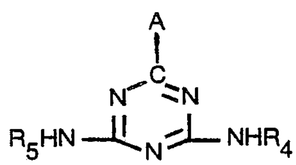

in which

A is chlorine, methoxy or methylthio; and

$R_4$ and $R_5$ are independently $C_1$—$C_4$ alkyl, $C_2$—$C_8$ alkoxyalkyl or $C_1$—$C_4$ cyanoalkyl.

These compounds are described in U.S. Patent Nos. 2,891,855 and 2,909,420.

Previously, various s-triazines have been combined with various thiolcarbamates to form a herbicidal composition. (See United States Patent Nos. 3,037,853 and 3,682,616.)

Several recent patents described liquid formulations containing a liquid thiolcarbamate and a solid s-triazine compound. (See Belgian Patent No. 889,274 and South African Patent Application No. 77/3478.) None of the formulations described in these publications are successful commercially. The solid s-triazine part of the formulation separates from the liquid thiolcarbamate upon standing and therefor is commercially unacceptable. In addition, the prior art formulations have poor dilution properties in hard water and nitrogenous fertilizer solutions.

The present invention is directed to a flowable herbicidal formulation containing one or more liquid thiolcarbamates and one or more solid s-triazines. The formulation is dilutable by water or water-containing liquid before application in the field.

The formulation of this invention has the advantage that it can contain a high amount (50—85 percent by weight) of active ingredients, i.e., the liquid thiolcarbamate and solid s-triazine/herbicides. The formulation is thermally stable over a wide temperature range. The formulation is compatible with and dilutable by both hard and soft water. The formulation is also compatible and dilutable with a nitrogenous fertilizer solution.

Most importantly, neither the solid s-triazine component nor water of the herbicidal formulation of this invention separate from the liquid thiolcarbamate component upon aging over months of storage over a wide temperature range. The formulation has been found to be stable over months of storage over a wide temperature range.

Description of the Invention

One embodiment of this invention is a novel herbicidal composition comprising:

(a) one or more liquid thiolcarbamates of the formula

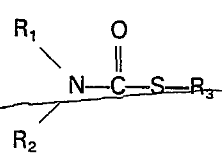

in which $R_1$, $R_2$ and $R_3$ are as defined above; preferably $R_1$, $R_2$ and $R_3$ are independently $C_1$—$C_6$ alkyl; most preferably $R_1$ and $R_2$ are each isobutyl, and $R_3$ is ethyl;

(b) one or more solid s-triazine herbicides of the formula

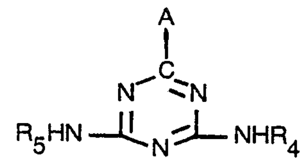

in which A, $R_4$ and $R_5$ are as defined above.

Preferably, A is chlorine, and $R_4$ and $R_5$ are independently $C_1$—$C_4$ alkyl, more preferably $R_4$ is ethyl, and $R_5$ is isopropyl.

(c) optionally, an antidotally effective amount of an acyl or thioacyl substituted oxazolidine or thiazolidine antidote compound of the formula

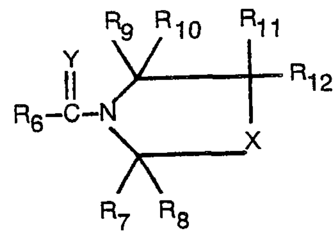

wherein

X is oxygen or sulfur;

Y is oxygen or sulfur;

$R_6$ is $C_1$—$C_{10}$ alkyl, $C_1$—$C_{10}$ haloalkyl, $C_1$—$C_4$ alkylthio or $C_2$—$C_4$ chloralkenyl;

$R_8$, $R_9$, $R_{10}$ and $R_{12}$ are hydrogen, $C_1$—$C_4$ alkyl, $C_2$—$C_4$ alkoxyalkyl or $C_1$—$C_4$ hydroxyalkyl;

$R_7$ and $R_{11}$ are hydrogen, $C_1$—$C_4$ alkyl, $C_2$—$C_4$ alkoxyalkyl, phenyl, naphthyl, substituted phenyl wherein the substituents are monofluoro, monochloro, dichloro, nitro, methyl, methoxy or hydroxy;

or an amide of haloalkanoic acid having 2 to 7 carbon atoms or an amide having the formula

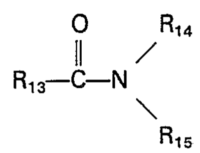

wherein $R_{13}$ is selected from haloalkyl; haloalkenyl; alkyl; alkenyl; cycloalkyl; cycloalkylalkyl; halogen; hydrogen; alkoxycarbonyl; N-alkenylcarbamoylalkyl; N-alkenylcarbamoyl; N-alkyl-N-alkynylcarbamoyl; N-alkyl-N-alkynylcarbamoylalkyl; N-alkenylcarbamoylalkoxyalkyl; N-alkyl-N-alkynylcarbamoylalkoxyalkyl; alkynyloxy; haloalkoxy; thiocyanatoalkyl; alkenylaminoalkyl; alkylcarbonylalkyl; cyanoalkyl; cyanatoalkyl; alkenylaminosulfonylalkyl; alkylthioalkyl; haloalkylcarbonyloxyalkyl; alkoxycarbonylalkyl; haloalkenylcarbonyloxyalkyl; hydroxyhaloalkyloxyalkyl; hydroxyalkylalkoxycarbonylalkyl; hydroxyalkyl; alkoxysulfonylalkyl; furyl, thienyl; dithiaalkenyl; thienylalkyl; phenyl; substituted phenyl wherein said substituents are selected from halogen, alkyl, haloalkyl, alkoxy, carbamoyl, nitro, hydroxycarbonyl and their salts and haloalkylcarbamoyl; phenylalkyl; phenylhaloalkyl; phenylalkenyl; substituted phenyalkenyl wherein said substituents are selected from halogen, alkyl and alkoxy; halophenoxy; phenylalkoxy; phenylalkylcarbonyloxyalkyl; phenylcycloalkyl; halophenylalkenyloxy; halothiophenyl; halophenoxyalkyl; bicycloalkyl; alkenylcarbamoylpyridinyl; alkynylcarbamoylpyridyl; dialkenylcarbamoylbicycloalkenyl and alkynylcarbamoylbicycloalkenyl; $R_{14}$ and $R_{15}$, which may be the same or different, are selected from alkenyl; haloalkenyl; hydrogen, alkyl; haloalkyl; alkynyl; cyanoalkyl; hydroxyalkyl, hydroxyhaloalkyl; haloalkylcarbonyloxyalkyl; alkylcarbonyloxyalkyl; alkoxycarbonyloxyalkyl; alkylthiocarbonyloxyalkyl; alkoxycarbonylalkyl; alkylcarbamoyloxyalkyl; amino; formyl; haloalkanoyl-N-alkylamino; haloalkanoylamino; haloalkanoylaminoalkyl; haloalkanoyl-N-alkylaminoalkyl; haloalkanoylaminoalkenyl; alkylimino; cycloalkyl; alkylcycloalkyl; alkoxyalkyl; alkylsulfonyloxyalkyl; mercaptoalkyl; alkylaminoalkyl; alkoxycarbonylalkenyl; haloalkylcarbonyl; alkylcarbonyl; alkenylcarbamoyloxyalkyl; cycloalkylcarbamoyloxyalkyl; alkoxycarbonyl; haloalkoxycarbonyl; halophenylcarbamoyloxalkyl; cycloalkenyl; phenyl; substituted phenyl wherein said substituents are selected from alkyl, halogen, haloalkyl, alkoxy, haloalkanoylamino, phthalimido, hydroxy, alkylcarbamoyloxy, alkenylcarbamyloxy, alkanoylamino, alkanoylalkenyl and phenylsulfonyl; phenylalkyl; substituted phenylalkyl wherein said substituents are selected from halogen and alkyl; dioxyalkylene, halophenoxyalkanoylaminoalkyl; alkylthiadiazolyl; piperidylalkyl; thiazolyl; alkylthiazolyl; benzothiazolyl; halobenzothiazolyl; furylalkyl; pyridyl; alkylpyridyl;

alkyloxazolyl; tetrahydrofurylalkyl; 3-cyano-4,5-polyalkylene-thienyl; α-haloalkylacetamidophenylalkyl; α-haloalkylacetamido-nitrophenylalkyl; α-haloalkylacetamido-halophenylalkyl and cyanoalkenyl; $R_{14}$ and $R_{15}$, when taken together with the nitrogen atom to which they are attached can form piperidino; alkylpiperidino; alkyl- 1-tetrahydropyridyl; morpholino, alkylmorpholino; azobicyclonyl; alkylindolinyl; 3-oxazolidinyl; alkyl-3-oxazolidinyl perhydroquinolyl or alkylaminoalkylene; provided that when $R_{14}$ is hydrogen $R_{15}$ is other than hydrogen and halophenyl, preferably the antidote compound is N,N-diallyl-dichloroacetamide or 2,2,2-trimethyl-N-dichloroacetamide;

(d) an anionic emulsifier having the structural formula:

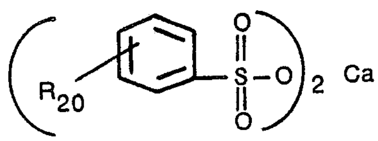

wherein $R_{20}$ is a $C_{14}$—$C_{15}$ alkyl, preferably a branched-chain dodecyl;

(e) a non-ionic or modified non-ionic emulsifier having the structural formula

$$R_{21}—O—(CH_2CH_2O)_n—R_{22}—\overset{\overset{O}{\|}}{C}—OH$$

or $R_{21}$—O—$(CH_2CH_2O)_nH$ wherein n is the integer 7 to 14, preferably the integer 9, $R_{21}$ is $C_5$—$C_{20}$ alkyl, $C_5$—$C_{20}$ alkylphenyl, $C_5$—$C_{20}$ alkylnaphthyl or di- or tri- $C_5$—$C_{20}$ alkyl substituted phenyl or naphthyl, preferably $R_{21}$ is the group

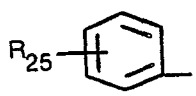

wherein $R_{25}$ is a $C_7$—$C_{12}$ alkyl, preferably nonyl, $R_{22}$ is a methylene, ethylene or propylene group, preferably methylene;

(f) a water soluble wetting agent having the structural formula

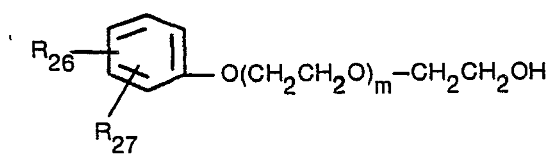

wherein $R_{26}$ is a $C_7$—$C_{12}$ alkyl, preferably nonyl, $R_{27}$ is $C_7$—$C_{12}$ alkyl, preferably nonyl or hydrogen and m is the integer 50 to 150, for example 149, preferably 70—120;

(g) the calcium salt of lignin sulfonate as a dispersing agent;

(h) an anti-foaming agent, preferably dimethylpolysiloxane;

(i) fumed silicas as a thickener; and

(j) water.

The ratio of the liquid thiolcarbamate to the solid s-triazine can range from 1:1 to 12:1 with the total amount of active ingredients varying between 50 to 85 percent by total weight at the 1:1 ratio to between 71.5 to 80.5 percent by total weight at the 12:1 ratio.

The use of a recited antidote compound is optional.

When it is desired, the amount can range up to an amount that is herbicidal. This range is termed "an antidotally effective amount". Generally, this range will vary from 0.1 to 15.0 percent by weight based upon the weight of the thiolcarbamate. Preferably the range is between 3 to 5 percent by weight based upon the weight of the thiolcarbamate.

The combined weight of the water-insoluble anionic and non-ionic or modified non-ionic emulsifiers can range between 5.0 to 20.0 percent by weight based upon the total weight of the formulation. Preferably, the amount of the anionic emulifier can vary from 15 to 65 percent by weight of the combined amount. Correspondingly, the non-ionic emulsifier can vary from 85 to 35 percent by weight of the combined amount.

The amount of water-soluble wetting agent can range between 2.0 to 5.0 percent by weight per total weight.

The amount of water-soluble dispersing agent can range between 0.5 to 5.0 percent by weight per total weight.

The amount of anti-foaming agent can range between 0.01 to 0.5 percent by weight per total weight.

The amount of water can range up to 35.0 percent by weight per total weight.

The amount of the fumed silicas thickener can range between 0.5 to 5.0 percent by weight per total weight.

The pesticidal composition of the invention can be prepared by separately preparing an oil portion and an aqueous portion and then combining the two together along with the thickener.

First considering the aqueous portion, the solid s-triazine herbicide is ground to a particle size of from 2 to 5 µm. Preferably grinding is done in water in conventional grinding equipment, i.e. such as a ball. The water-soluble wetting and dispersing agents can be combined with the s-triazine either before, during, or after the grinding step. The anti-foaming agent is used during the grinding step to minimize foaming. When water is used in the grinding of the s-triazine, an aqueous slurry of the s-triazine in water results from the grinding step.

The oil portion is prepaed by dissolving the anionic, non-ionic or modified non-ionic emulsifier along with any antidote in the liquid thiolcarbamate and any diluent. The solution can be prepared in any convenient vessel. Any stirring apparatus, such as a paddle stirrer, can be used to aid solution. Heating can also be used to aid the solution.

Next, the aqueous portion and the oil portion are combined. Simply, the aqueous portion can be poured into the oil portion using conventional equipment. Simple stirring can be used to form a homogeneous mixture.

Next, the thickener is added to the combined portion to increase the viscosity of the mixture and insure suspension of the s-triazine.

Example I

The following are examples of the herbicidal compositions of this invention.

| Ingredient | Weight (grams) |
|---|---|
| a) S-ethyl N,N-diisobutylthiolcarbamate | 460.9 |
| b) 2-chloro-4-ethylamino-6-isopropylamino-1,3,5-triazine (atrazine) | 392.0 |
| c) N,N-diallyldichloroacetamide (antidote) | 19.2 |
| d) calcium salt of dodecyl benzene sulfonate (anionic emulsifier) | 156.1 |
| e) 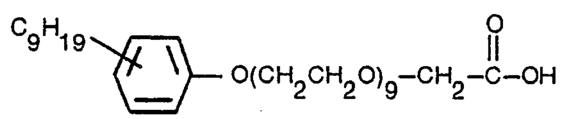 (non-ionic emulsifier) | 164.0 |
| f) 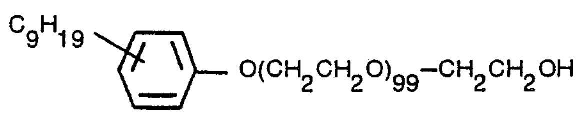 (wetting agent) | 44.0 |
| g) calcium salt of lignin sulfonate (dispersing agent) | 24.0 |
| h) dimethylpolysiloxane (anti-foaming agent) | 0.8 |
| i) fumed silicas (dispersing agent) | 10.0 |
| j) water | 339.2 |

The liquid portion of the formulation is prepared by weighing the liquid thiolcarbamate, antidote, anionic and non-ionic emulsifiers into a 0.946l (one-quart) glass bottle. The bottle is capped, warmed and shaken to yield a clear, homogenous solution.

The aqeuous portion of the formulation is prepared by weighing the wetting agent, dispersing agent, anti-foaming agent, water and atrazine (previously air-milled to an average particle size of 3—4κm) into a two-liter glass beaker. The beaker is fitted with a flexible plastic cover. A high speed dissolver, extending through an opening in the cover down to the bottom of the beaker, is used to blend the ingredients into an aqueous slurry.

The liquid portion (455.0 grams) was weighed into a 4-liter glass beaker. Next, 535.0 g of the resulting aqueous slurry of atrazine is added to the liquid portion of the formulation and 10.0 grams of fumed silicas are added as a suspending agent. The mixture is covered and swirled to wet the components. Finally, a

high-speed liquid dissolver is used for about 10 minutes to completely blend all the ingredients.

The resulting product is a homogeneous liquid mixture and remains stable to separation. The product can be diluted with hard and soft water or nitrogenous fertilizer solutions.

Example II

The following ingredients are used in this formulation:

| Ingredient | Weight (grams) |
|---|---|
| a) S-ethyl N,N-disobutylthiolcarbamate | 678.40 |
| b) 2-chloro-4-ethylamino-6-isopropylamino-1,3,5-triazine (atrazine) | 550.00 |
| c) N,N-diallyldichloroacetamide (antidote) | 29.04 |
| d) calcium salt of dodecyl benzene sulfonate (anionic emulsifier) | 45.12 |
| e) 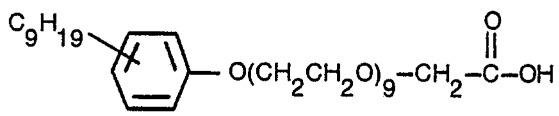 (non-ionic emulsifier) | 47.44 |
| f) 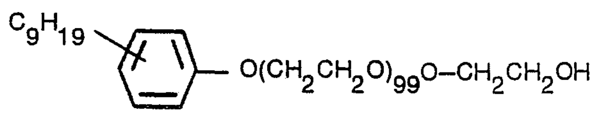 (wetting agent) | 12.10 |
| g) calcium salt of lignin sulfonate (dispersing agent) | 12.60 |
| h) dimethylpolysiloxane (anti-foaming agent) | 0.30 |
| i) fumed silicas (dispersing agent) | 61.00 |
| j) water | 425.00 |

The liquid portion of the formulation is prepared by weighing the liquid thiolcarbamate, antidote, anionic, non-ionic or modified non-ionic emulsifiers into a 0.946 l (one-quart) glass bottle. The bottle is capped, warmed and shaken to yield a clear, homogeneous solution.

The aqueous portion of the formulation is prepared by weighing the wetting agent, dispersing agent, anti-foaming agent, water and atrazine into a 1.892 l (half-gallon) ceramic ball mill containing 1.27 cm (one-half) inch ceramic balls. The mill is covered and turned on rollers for three days. The average size of the atrazine in the slurry is reduced to about 3—4 ψ9m (measured on a Coulter counter).

The milled slurry (900 g) is poured into a glass tray (31.75 × 21.59 × 5.08 cr; 8.5 × 2.0 inches) and allowed to air dry. The partially dried material is placed in an oven at 32.3—37.8°C (90—100°F) overnight to completely remove the remaining water. A solid material (517 g) is obtained.

Next, 372 grams of the dried material was combined with 420 g of the liquid portion and 8.0 g of fumed silicas in 1.892 l in a (half-gallon) ceramic ball mill. The mill was turned for about 3 hours to yield a homogenous suspension of the solid atrazine in the liquid thiolcarbamate.

The resulting product liquid mixture remains stable to separation. The product can be diluted with hard and soft water or nitrogenous fertilizer solutions.

The composition of this invention can be applied by standard tank mix operations using water to dilute the concentrate, or it can be applied by addition to irrigation water supplied to the field. These methods of application permit the penetration of the active composition into the soil as the water is absorbed therein. It is not necessary that the compositions be admixed with the soil particles. After application by the above discussed methods, the wetted top soil can be tilled below the surface to a depth of at least 1.27 cm (one-half inch) by conventional means such as discing, dragging, or mixing.

A herbicide is a compound which controls or modifies plant growth, e.g., killing, retarding, defoliating, desiccating, regulating, stunting, tillering, stimulating, and dwarfing. "Plant" refers to all physical parts, including seeds, seedlings, saplings, roots, tubers, stems, stalks, foliage, and fruits. "Plant growth" is meant to include all phases of development from seed germination to natural or induced cessation of life.

A manufacturer of a particular herbicide recommends a range of rates and concentrations calculated to maximize weed control The range of rates varies from approximately 0.0112 to 56 klha (0.01 to 50 pounds per acre) usually from (0.1 to 25 lb/A). The actual amount used depends upon several considerations including particular weed susceptibility and overall cost limitations.

Unfortunately, at these rates of application both weeds and the intended crop beneficiary can be injured. Therefore, a particular herbicide's use may be limited by its injurious effect on the cultivated crop.

To preserve the beneficial aspects of herbicide use and to mitigate crop damage, herbicidal antidotes have been developed. These antidotes reduce or eliminate damage to the crop without substantially impairing the ameliorative effect of the herbicide. They are described in U.S. Patent Nos. 3,989,502, 4,021,224, 4,072,688 and 4,124,372.

Although several explanatory theories have been advanced, the precise mechanism by which an antidote reduces herbicidal injury has not been empirically verified. An antidote compound may in fact by a remedy, interferent, protectant, or antagonist. As used herein "antidote" describes the effect of herbicidal phytoxocity to weed species and reduced or non-phytotoxicity to cultivated crop species.

**Claims**

1. A herbicidal composition comprising

(a) one or more liquid thiolcarbamates of the formula

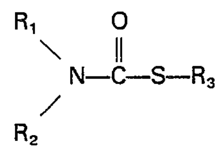

in which

$R_y$ is $C_1$—$C_6$ alkyl, $C_2$—$C_6$ alkenyl or $C_2$—$C_6$ alkynyl;

$R_2$ is $C_1$—$C_6$ alkyl, $C_2$—$C_6$ alkenyl, cyclohexyl or phenyl; or

$R_1$ and $R_2$ together with the nitrogen atom to which they are attached form a ring structure having 4—10 carbon atoms;

$R_3$ is $C_1$—$C_6$ alkyl, $C_2$—$C_4$ alkenyl, benzyl, phenyl, halophenyl, methyl substituted phenyl or benzyl or $C_1$—$C_6$ haloalkyl;

(b) one or more solid s-triazine compounds of the formula

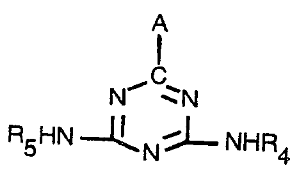

in which

A is chlorine, methoxy or methylthio; and

$R_4$ and $R_5$ are independently $C_1$—$C_4$ alkyl, $C_2$—$C_8$ alkoxyalkyl or $C_{1}$—$_4$ cyanoalkyl, and having a particle size between 2 to 5 µm;

(c) optionally an antidotally effective amount of an acyl or thioacyl substituted oxazolidine or thiazolidines antidote compound of the formula

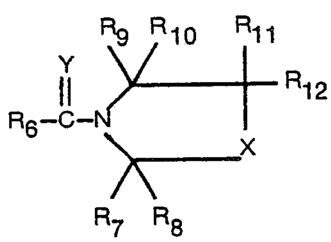

wherein

X is oxygen or sulfur;

Y is oxygen or sulfur;

$R_6$ is $C_1$—$C_{10}$ alkyl, $C_1$—$C_{10}$ haloalkyl, $C_1$—$C_4$ alkylthio or $C_2$—$C_4$ chloralkenyl;

$R_8$, $R_9$, $R_{10}$ and $R_{12}$ are hydrogen, $C_1$—$C_4$ alkyl, $C_2$—$C_4$ alkoxyalkyl or $C_1$—$C_4$ hydroxyalkyl;

$R_7$ and $R_{11}$ are hydrogen, $C_1$—$C_4$ alkyl, $C_2$—$C_4$ alkoxyalkyl, phenyl, naphthyl, substituted phenyl wherein paid substituents are monofluoro, monochloro, dichloro, nitro, methyl, methoxy or hydroxy;

or an amide of haloalkanoic acid having 2 to 7 carbon atoms or an amide having the formula

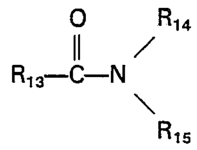

wherein $R_{13}$ is selected from haloalkyl; haloalkenyl; alkyl; alkenyl; cycloalkyl; cycloalkylalkyl; halogen; hydrogen; alkoxycarbonyl; N-alkenylcarbamoylalkyl; N-alkenylcarbamoyl; N-alkyl-N-alkynylcarbamoyl; N-alkyl-N-alkynylcarbamoylalkyl; N-alkenylcarbamoylalkoxyalkyl; N-alkyl-N-alkynylcarbamoylalkoxyalkyl; alkynyloxy; haloalkoxy; thiocyanatoalkyl; alkenylaminoalkyl; alkylcarbonylalkyl; cyanoalkyl; cyanatoalkyl; alkenylaminosulfonylalkyl; alkylthioalkyl; haloalkylcarbonyloxyalkyl; alkoxycarbonylalkyl; haloalkenylcarbonyloxyalkyl; hydroxyhaloalkyloxyalkyl; hydroxyalkylalkoxycarbonylalkyl; hydroxyalkyl; alkoxysulfonylalkyl; furyl, thienyl; dithiaalkenyl; thienylalkyl; phenyl; substituted phenyl wherein said substituents are selected from halogen, alkyl, haloalkyl, alkoxy, carbamoyl, nitro, hydroxycarbonyl and their salts and haloalkylcarbamoyl; phenylalkyl; phenylhaloalkyl; phenylalkenyl; substituted phenyalkenyl wherein said substituents are selected from halogen, alkyl and alkoxy; halophenoxy; phenylalkoxy; phenylalkylcarbonyloxyalkyl phenylcycloalkyl; halophenylalkenyloxy; halothiophenyl; halophenoxyalkyl; bicycloalkyl; alkenylcarbamoylpyridyl; alkynylcarbamoylpyridyl; dialkenylcarbamoylbicycloalkenyl; alkynylcarbamoylbicycloalkenyl; $R_{14}$ and $R_{15}$, which may be the same or different, are selected from alkenyl; haloalkenyl; hydrogen, alkyl; haloalkyl; alkynyl; cyanoalkyl; hydroxyalkyl, hydroxyhaloalkyl; haloalkylcarbonyloxyalkyl; alkylcarbonyloxyalkyl; alkoxycarbonyloxyalkyl; alkylthiocarbonyloxyalkyl; alkoxycarbonylalkyl; alkylcarbamoyloxyalkyl; amino; formyl; haloalkanoyl-N-alkylamino; haloalkanoylamino; haloalkanoylaminoalkyl; haloalkanoyl-N-alkylaminoalkyl; haloalkanoylaminoalkenyl; alkylimino; cycloalkyl; alkylcycloalkyl; alkoxyalkyl; alkylsulfonyloxyalkyl; mercaptoalkyl; alkylaminoalkyl; alkoxycarbonylalkenyl; haloalkylcarbonyl; alkylcarbonyl; alkenylcarbamoyloxyalkyl; cycloalkylcarbamoyloxyalkyl; alkoxycarbonyl; haloalkoxycarbonyl; halophenylcarbamoyloxyalkyl; cycloalkenyl; phenyl; substituted phenyl wherein said substituents are selected from alkyl, halogen, haloalkyl, alkoxy, haloalkanoylamino, phthalimido, hydroxy, alkylcarbamoyloxy, alkenylcarbamyloxy, alkanoylamino, alkanoylalkenyl and phenylsulfonyl; phenylalkyl; substituted phenylalkyl wherein said substituents are selected from halogen and alkyl; dioxyalkylene, halophenoxyalkanoylaminoalkyl; alkylthiadiazolyl; piperidylalkyl; thiazolyl; alkylthiazolyl; benzothiazolyl; halobenzothiazolyl; furylalkyl; pyridyl; alkylpyridyl; alkyloxazolyl; tetrahydrofurylalkyl; 3-cyano-4,5-polyalkylene-thienyl; α-haloalkylacetamidophenylalkyl; α-haloalkylacetamido-nitrophenylalkyl; α-haloalkylacetamido-halophenylalkyl and cyanoalkenyl; $R_{14}$ and $R_{15}$, when taken together with the nitrogen atom to which they are attached can form piperidino; alkylpiperidino; alkyl- 1-tetrahydropyridyl; morpholino, alkylmorpholino; azobicyclonyl; alkylindolinyl; 3-oxazolidinyl; alkyl-3-oxazolidinyl perhydroquinolyl or alkylaminoalkylene; provided that when $R_{14}$ is hydrogen $R_{15}$ is other than hydrogen and halophenyl;

, (d) an anionic emulsifier having the structural formula:

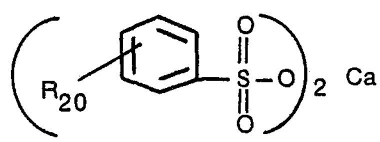

wherein $R_{20}$ is a $C_{10}$—$C_{15}$ alkyl;

(e) a non-ionic or modified non-ionic emulsifier having the structural formula

$$R_{21}—O—(CH_2CH_2O)_n—R_{22}—\overset{O}{\overset{\|}{C}}—OH$$

or $R_{21}$—O—$(CH_2CH_2O)_nH$ wherein n is the integer 7 to 14 and $R_{21}$ is $C_5$—$C_{20}$ alkyl, $C_5$—$C_{20}$ alkylphenyl, $C_5$—$C_{20}$ alkylnaphthyl or di- or tri- $C_5$—$C_{20}$ alkyl substituted phenyl or naphthyl, $R_{22}$ is methylene, ethylene or propylene;

(f) a water soluble wetting agent that is insoluble in said thiocarbamate having the structural formula

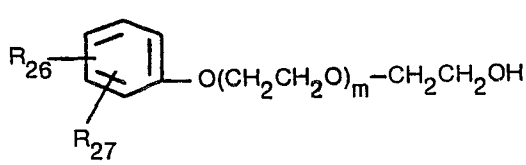

wherein $R_{26}$ is a $C_7$—$C_{12}$ alkyl, $R_{27}$ is $C_7$—$C_{12}$ alkyl or hydrogen and m is the integer 50 to 150;

(g) the calcium salt of lignin sulfonate as a dispersing agent;

(h) an anti-foaming agent;
(i) fumed silicas; and
(j) water.

2. The herbicidal composition of Claim 1 wherein:
(a) the liquid thiolcarbamate is S-ethyl N,N-diisobutylthiolcarbamate;
(b) the triazine is atrazine; and
(c) the antidote is N,N-diallyldichloroacetamide.

3. The herbicidal composition of Claim 1 wherein:
(a) the liquid thiolcarbamate is S-ethyl N,N-diisobutylthiolcarbamate
(b) the s-triazine is atrazine;
(c) the antidote is N,N-diallyldichloracetamide;
(d) the anionic emulsifier is the calcium salt of dodecyl benzene sulfonic acid;
(e) the non-ionic or modified non-ionic emulsifier has the structural formula

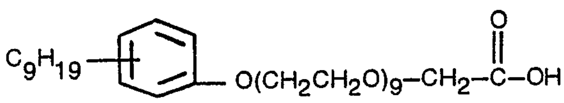 or 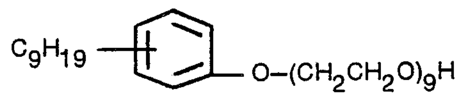

(f) the wetting agent has the structural formula

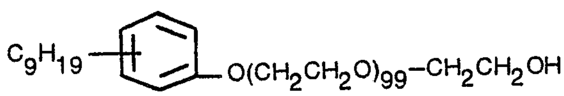 or 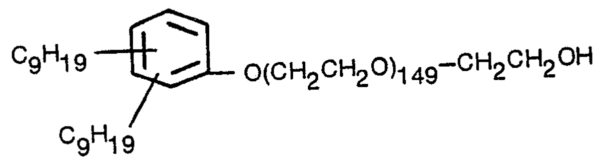

(g) the dispersing agent is the calcium salt of lignin sulfonate
(h) anti-foaming agent;
(i) fumed silica; and
(j) water.

4. The herbicidal composition of Claim 1 wherein the non-ionic or modified non-ionic emulsifier has the structural formula

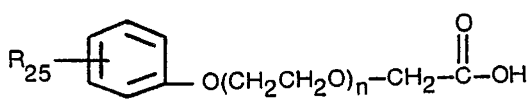 or 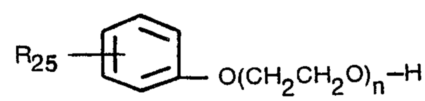

wherein n is the integer 7 to 14 and $R_{25}$ is a $C_7$—$C_{12}$ alkyl.

**Patentansprüche**

1. Herbizide Zusammensetzung, umfassend
(a) ein oder mehrere, flüssige Thiolcarbamate der Formel

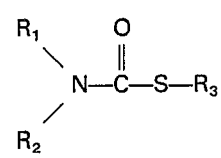

worin bedeuten:

$R_y$ $C_1$—$C_6$-Alkyl, $C_2$—$C_6$-Alkenyl oder $C_2$—$C_6$-Alkinyl;

$R_2$ $C_1$—$C_6$-Alkyl, $C_2$—$C_6$-Alkenyl, Cyclohexyl oder Phenyl; oder

$R_1$ und $R_2$ bilden zusammen mit dem Stickstoffatom, an dem sie gebunden sind, eine Ringstruktur mit 4—10 Kohlenstoffatomen;

$R_3$ $C_1$—$C_6$-Alkyl, $C_2$—$C_4$-Alkenyl, Benzyl, Phenyl, Halogenphenyl, mit Methyl substituiertes Phenyl oder Benzyl oder $C_1$—$C_6$-Halogenalkyl;

(b) eine oder mehrere, feste s-Triazinverbindungen der Formel

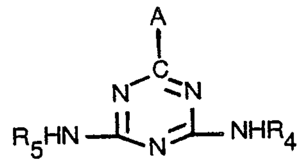

worin bedeuten:

A Chlor, Methoxy oder Methylthio; und

$R_4$ und $R_5$ unabhängig voneinander $C_1$—$C_4$-Alkyl, $C_2$—$C_8$-Alkoxyalkyl oder $C_1$—$C_4$-Cyanoalkyl, und welche eine Teilchengröße zwischen 2 bis 5 µm besitzen;

(c) wahlweise eine antidotal wirksame Menge einer acyl- oder thioacylsubstituierten Oxazolidin- oder Thiazolidin-Antidot-Verbindung der Formel

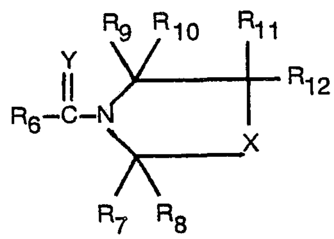

worin bedeuten:

X Sauerstoff oder Schwefel;

Y Sauerstoff oder Schwefel;

$R_6$, $C_1$—$C_{10}$-Alkyl, $C_1$—$C_{10}$-Halogenalkyl, $C_1$—$_4$-Alkylthio oder $C_2$—$C_4$-Chloralkenyl;

$R_8$, $R_9$, $R_{10}$ und $R_{12}$ Wasserstoff, $C_1$—$C_4$-Alkyl, $C_2$—$C_4$-Alkoxyalkyl oder $C_1$—$C_4$-Hydroxyalkyl;

$R_7$ und $R_{11}$ Wasserstoff, $C_1$—$C_4$-Alkyl, $C_2$—$C_4$-Alkoxyalkyl, Phenyl, Naphthyl, substituiertes Phenyl, wobei die Substituenten Monofluor, Monochlor, Dichlor, Nitro, Methyl, Methoxy oder Hydroxy sind; oder ein Amid einer Halogenalkansäure mit 2 bis 7 Kohlenstoffatomen oder ein Amid der Formel

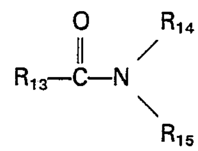

worin

$R_{13}$ gewählt wird aus Halogenalkyl; Halogenalkenyl; Alkyl; Alkenyl; Cycloalkyl; Cycloalkylalkyl; Halogen; Wasserstoff; Alkoxycarbonyl; N-Alkenylcarbamoylalkyl; N-Alkenylcarbamoyl; N-alkyl-N-alkinylcarbamoyl; N-Alkyl-N-alkinylcarbamoylalkyl; N-Alkenylcarbamoylalkoxyalkyl; N-Alkyl-N-alkinylcarbamoylalkoxyalkyl; Alkinyloxy; Halogenalkoxy; Thiocyanatoalkyl; Alkenylaminoalkyl; Alkylcarbonylalkyl; Cyanoalkyl; Cyanotoalkyl; Alkenylaminosulfonylalkyl; Alkylthioalkyl; Halogenalkylcarbonyloxyalkyl; Alkoxycarbonylalkyl, Halogenalkenylcarbonyloxyalkyl; Hydroxyhalogenalkyloxyalkyl; Hydroxyalkylalkoxycarbonylalkyl; Hydroxyalkyl; Alkoxysulfonylalkyl; Furyl, Thienyl; Dithiaalkenyl; Thienylalkyl; Phenyl; substituiertes Phenyl, wobei die Substituenten gewählt werden aus Halogen, Alkyl, Halogenalkyl, Alkoxy, Carbamoyl, Nitro, Hydroxycarbonyl und deren Salze und Halogenalkylcarbamoyl; Phenylalkyl; Phenylhalogenalkyl; Phenylalkenyl; substituiertes Phenylalkenyl, wobei die Substituenten gewählt werden aus Halogen, Alkyl und Alkoxy; Halogenphenoxy; Phenylalkoxy; Phenylalkylcarbonyloxyalkyl; Phenylcycloalkyl; Halogenphenylalkenoxy; Halogenalkylthiophenyl, Halogenphenoxyalkyl; Bicycloalkyl; Alkenylcarbamoylpyridyl; Alkinylcarbamoylpyridyl; Dialkenylcarbamoylbicycloalkenyl; Alkinylcarbamoylbicycloalkenyl; $R_{14}$ und $R_{15}$, die gleich oder verschieden sein können, gewählt werden aus Alkenyl; Halogenalkenyl; Wasserstoff, Alkyl; Halogenalkyl; Alkinyl; Cyanoalkyl; Hydroxyalkyl, Hydroxyhalogenalkyl; Halogenalkylcarbonyloxyalkyl; Alkylcarbonyloxyalkyl; Alkoxycarbonyloxyalkyl; Alkylthiocarbonyloxyalkyl; Alkoxycarbonylalkyl; Alkylcarbamoyloxyalkyl; Amino; Formyl; Halogenalkanoyl-N-alkylamino; Halogenalkanoylamino; Halogenalkanoylaminoalkyl; Halogenalkanoyl-N-alkylaminoalkyl; Halogenalkanoylaminoalkenyl; Alkylimino; Cycloalkyl; Alkylcycloalkyl; Alkoxyalkyl; Alkylsulfonyloxyalkyl; Mercaptoalkyl; Alkylaminoalkyl; Alkoxycarbonylalkenyl; Halogenalkylcarbonyl; Alkylcarbonyl; Alkenylcarbamoyloxyalkyl; Cycloalkylcarbamoyloxyalkyl; Alkoxycarbonyl; Halogenalkoxycarbonyl; Halogenphenylcarbamoyloxyalkyl; Cycloalkenyl; Phenyl; substituiertes Phenyl, wobei die Substituenten gewählt werden aus Alkyl, Halogen, Halogenalkyl, Alkoxy, Halogenalkanoylamino, Phthalimido, Hydroxy, Alkylcarbamoyloxy, Alkenylcarbamoyloxy, Alkanoylamino, Alkanoylalkenyl und Phenylsulfonyl; Phenylalkyl; substituiertes Phenylalkyl, wobei die Substituenten gewählt werden aus Halogen und Alkyl; Dioxyalkylen, Halogenphenoxyalkanoylaminoalkyl; Alkylthiadiazolyl; Piperidylalkyl; Thiazolyl; Alkylthiazolyl; Benzothiazolyl; Halogenbenzothiazolyl; Furylalkyl; Pyridyl; Alkylpyridyl; Alkyloxazolyl; Tetrahydrofurylalkyl; 3-Cyano-4,5-polyalkylen-thienyl; α-Halogenalkylacetamidophenylalkyl; α-Halogenalkylacetamidonitrophenylalkyl; α-Halogenalkylacetamido-halogenphenylalkyl und Cyanoalkenyl;

$R_{14}$ und $R_{15}$ können zusammen mit dem Stickstoffatom, an dem sie gebunden sind, Piperidino; Alkylpiperidino; Alkyl-1-tetrahydropyridyl; Morpholino, Alkylmorpholino; Azobicyclononyl; Alkylindolinyl; 3-Oxazolidinyl; Alkyl-3-oxazolidinyl; Perhydrochinolyl oder Alkylaminoalkylen bilden, mit der Maßgabe, daß, wenn $R_{14}$ Wasserstoff bedeutet, $R_{15}$ eine andere Bedeutung als Wasserstoff und Halogenphenyl besitzt;

(d) einen anionischen Emulgator der Strukturformel:

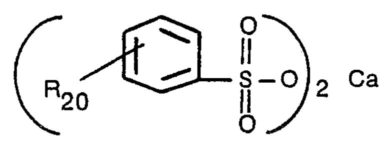

worin $R_{20}$ $C_{10}$—$C_{15}$-Alkyl bedeutet;

(e) einen nicht-ionischen oder modifizierten, nicht-ionischen Emulgator der Strukturformel:

$$R_{21}—O—(CH_2CH_2O)_n—R_{22}—\overset{\overset{\displaystyle O}{\|}}{C}—OH \text{ oder } R_{21}—O—(CH_2CH_2O)_nH$$

worin n eine ganze Zahl von 7 bis 14, $R_{21}$ $C_5$—$C_{20}$-Alkyl, $C_5$—$C_{20}$-Alkylphenyl, $C_5$—$C_{20}$-Alkylnaphthyl oder di- oder tri- $C_5$—$C_{20}$-Alkyl-substituiertes Phenyl oder Naphthyl und $R_{22}$ Methylen, Ethylen oder Propylen bedeuten;

(f) ein wasserlösliches Netzmittel, das in dem Thiocarbamat unlöslich ist, mit der Strukturformel:

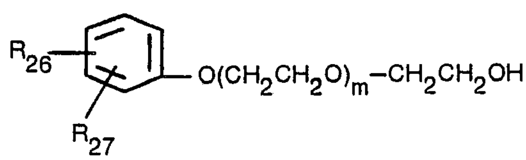

worin $R_{26}$ $C_7$—$C_{12}$-Alkyl, $R_{27}$ $C_{12}$-Alkyl oder Wasserstoff und m eine ganze Zahl von 50 bis 150 bedeuten;

(g) das Calciumsalz von Ligninsulfonat als Dispergiermittel;

(h) ein Antischaummittel;

(i) Fumed Silicas; und

(j) Wasser.

2. Herbizide Zusammensetzung nach Anspruch 1, wobei

(a) das flüssige Thiolcarbamat S-Ethyl-N,N-diisobutylthiolcarbamat ist;

(b) das Triazin Atrazin ist und

(c) das Antidot N,N-Diallyldichloracetamid ist.

3. Herbizide Zusammensetzung nach Anspruch 1, wobei

(a) das flüssige Thiolcarbamat S-Ethyl-N,N-diisobutylthiolcarbamat ist;

(b) das s-Triazin Atrazin ist;

(c) das Antidot N,N-Diallyldichloracetamid ist;

(d) der anionische Emulgator das Calciumsalz von Dodecylbenzolsulfonsäure ist;

(e) der nicht-ionische oder modifizierte, nicht-ionische Emulgator die Strukturformel

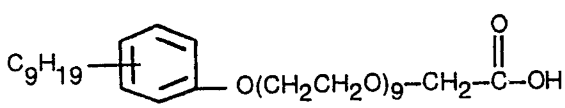 oder 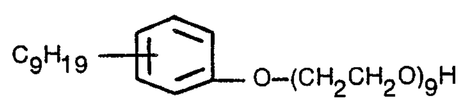

aufweist;

(f) das Netzmittel die Strukturformel

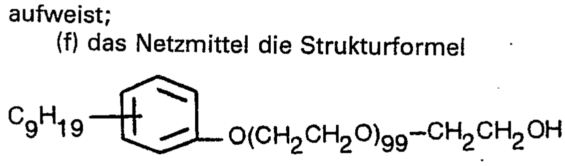 oder 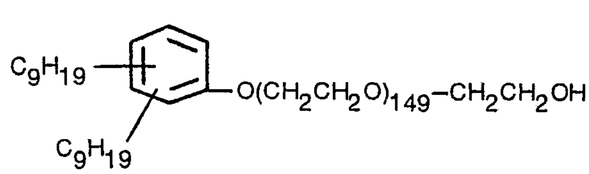

aufweist;

(g) das Dispergiermittel das Calciumsalz von Ligninsulfonat ist;
(h) Antischaummittel;
(i) Fumed Silica; und
(j) Wasser.

4. Herbizide Zusammensetzung nach Anspruch 1, wobei der nicht-ionische oder modifizierte, nicht-ionische Emulgator die Strukturformel

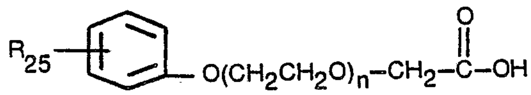 oder 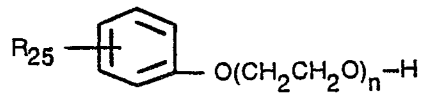

aufweist; worin n eine ganze Zahl von 7 bis 14 und $R_{25}$ $C_7$—$C_{12}$-Alkyl bedeuten.

## Revendications

1. Composition herbicide comprenant:
a) un ou plusieurs thiolcarbamates liquides répondant à la formule:

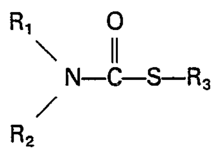

dans laquelle
$R_1$ est un groupe alkyle en $C_1$ à $C_6$, un groupe alcényle en $C_2$ à $C_6$ ou alcynyle en $C_2$ à $C_6$;
$R_2$ est un groupe alkyle en $C_1$ à $C_6$, alcényle en $C_2$ à $C_6$, cyclohexyle ou phényle; ou
$R_1$ et $R_2$ forment avec l'atome d'azote auquel ils sont fixés une structure cyclique ayant 4 à 10 atomes de carbone;
$R_3$ est un groupe alkyle en $C_1$ à $C_6$, alcényle en $C_2$ à $C_4$, benzyle, phényle, halophényle, phényle ou benzyle substitué par un méthyle ou haloalkyle en $C_1$ à $C_6$;
b) une ou plusieurs s-triazines solides répondant à la formule:

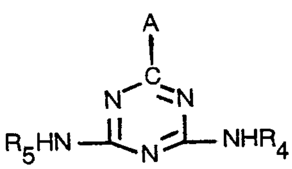

dans laquelle
A est le chlore, un groupe méthoxy ou méthylthio; et
$R_4$ et $R_5$ sont indépendamment un groupe alkyle en $C_1$ à $C_4$, alcoxyalkyle en $C_2$ à $C_8$ ou cyanoalkyle en $C_1$ à $C_4$, et ayant une taille de particule entre 2 et 5 µm.
c) si on le désire, une quantité efficace comme antidote d'un composé antidote oxazolidinique ou thiazolidinique substitué par un acyle ou un thioacyle répondant à la formule:

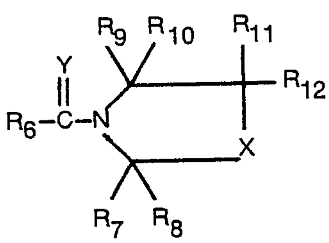

dans laquelle
X est l'oxygène ou le soufre;
Y est l'oxygène ou le soufre;
$R_6$ est un groupe alkyle en $C_1$ à $C_{10}$, haloalkyle en $C_1$ à $C_{10}$, alkylthio en $C_1$ à $C_4$ ou chloralcényle en $C_2$ à $C_4$;
$R_8$, $R_9$, $R_{10}$ et $R_{12}$ sont l'hydrogène, un groupe alkyle en $C_1$ à $C_4$, alcoxyalkyle en $C_2$ à $C_4$ ou hydroxyalkyle en $C_1$ à $C_4$;
$R_7$ et $R_{11}$ sont l'hydrogène, un groupe alkyle en $C_1$ à $C_4$, alcoxyalkyle en $C_2$ à $C_4$, phényle, naphtyle,

phényle substitué dans lequel les substituants sont des groupes monofluoro, monochloro, dichloro, nitro, méthyle, méthoxy ou hydroxy;
ou un amide d'un acide haloalcanoïque ayant 2 à 7 atomes de carbone ou un amide répondant à la formule:

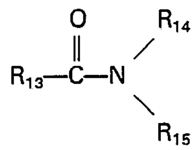

dans laquelle $R_{13}$ est choisi parmi les groupes haloalkyle; haloalcényle; alkyle; alcényle; cycloalkyle; cycloalkylalkyle; halogène; hydrogène; alcoxycarbonyle; N-alcénylcarbamoylalkyle; N-alcénylcarbamoyle; N-alkyl-N-alcynylcarbamoyle; N-alkyl-N-alcynylcarbamoylalkyle; N-alcénylcarbamoylalcoxyalkyle; N-alkyl-N-alcynylcarbamoylalcoxyalkyle; alcynyloxy; haloalcoxy; thiocyanatoalkyle; alcénylaminoalkyle; alkylcabonylalkyle; cyanoalkyle; cyanatoalkyle; alcénylaminosulfonylalkyle; alkylthioalkyle; haloalkylcarbonyloxyalkyle; alcoxycarbonylalkyle; haloalcénylcarbonyloxyalkyle; hydroxyhaloalkyloxyalkyle; hydroxyalkylalcoxycarbonylalkyle; hydroxyalkyle; alcoxysulfonylalkyle; furyle, thiényle; dithiaalcényle; thiénylalkyle; phényle; phényl substitué dans lequel ces substituants sont choisis parmi les halogènes, les groupes alkyle, haloalkyle, alcoxy, carbamoyle, nitro, hydroxycarbonyle et leurs sels et haloalkylcarbamoyle; phénylalkyle; phénylhaloalkyle; phénylalcényle; un groupe phénylalcényl substitué, dans lequel ces substituants sont choisis parmi les halogènes, les groupes alkyle et alcoxy; halophénoxy; phénylalcoxy; phénylalkylcarbonyloxyalkyle; phénylcycloalkyle; halophénylalcénoxy; haloalkylthiophényle; halophénoxyalkyle; bicycloalkyle; alcénylcarbamoylpyridyle; alcynylcarbamoylpyridyle; dialcénylcarbamoylbicycloalcényle; alcynylcarbamoylbicycloalcényle; $R_{14}$ et $R_{15}$ qui peuvent être identiques ou différents, sont choisis parmi les groupes alcényle; haloalcényle; hydrogène, alkyle; haloalkyle; alcynyle; cyanoalkyle; hydroxyalkyle, hydroxyhaloalkyle; haloalkylcarbonyloxyalkyle; alkylcarbonyloxyalkyle; alcoxycarbonyloxyalkyle; alkylthiocarbonyloxyalkyle; alcoxycarbonylalkyle; alkylcarbamoyloxyalkyle; amino; formyle; haloalkanoyl-N-alkylamino; haloalcanoylamino; haloalcanoylaminoalkyle; haloalcanoyl-N-alkylaminoalkyle; haloalkanoylaminoalcényle; alkylimino; cycloalkyle; alkylcycloalkyle; alcoxyalkyle; alkylsufonyloxyalkyle; mercaptoalkyle; alkylaminoalkyle; alcoxycarbonylalcényle; haloalkylcarbonyle; alkylcarbonyle; alcénylcarbamoyloxyalkyle; cycloalkylcarbamoyloxyalkyle; alcoxycarbonyle; haloalcoxycarbonyle; halophénylcarbamoyloxyalkyle; cycloalcényle; phényle; phényle substitué dans lequel ces substituants sont choisis parmi les groupes alkyle, halogène, haloalkyle, alcoxy, haloalcanoylamino, phtalimido, hydroxy, alkylcarbamoyloxy, alcénylcarbamoyloxy, alcanoylamino, alcanoylalcényle et phénylsulfonyle; phénylalkyle; phénylalkyle substitué dans lequel ces substituants sont choisis parmi les halogènes et les groupes alkyle; dioxyalcylène, halophénoxyalcanoylaminoalkyle; alkylthiadiazolyle; pipéridylalkyle; thiazolyle; alkylthiazolyle; benzothiazolyle; halobenzothiazolyle, furylalkyle; pyridyle; alkylpyridyle; alkyloxazolyle; tétrahydrofurylalkyle; 3-cyano-4,5-polyalkylè-nethiényle; α-haloalkylacétamidophénylalkyle; α-haloalkylacétamidonitrophénylalkyle; α-haloalkylacétamido-halophénylalkyle et cyanoalcényle; $R_{14}$ et $R_{15}$, lorsqu'ils sont pris ensemble avec l'atome d'azote auquel ils sont liés, peuvent former un radical pipéridino; alkylpipéridino; alkyl-1-tétrahydropyridyle; morpholino, alkylmorpholino; azobicyclononyle; alkylindolinyle; 3-oxazolidinyle; alkyl-3-oxazolidinyle perhydroquinolyle ou alkylaminoalkylène; sous réserve que lorsque $R_{14}$ est l'hydrogéne, $R_{15}$ est différent de l'hydrogène ou d'un groupe halophényle;

d) un émulsionnant anionique répondant à la formule développée:

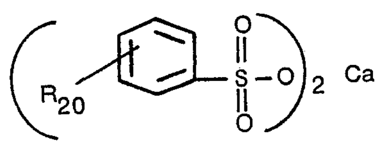

dans laquelle $R_{20}$ est un groupe alkyle en $C_{10}$ à $C_{15}$;

e) un émulsionnant non ionique ou non ionique modifié répondant à la formule développée:

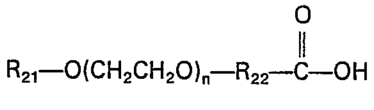 ou $R_{21}—O—(CH_2CH_2O)_nH$

dans laquelle n est un entier de 7 à 14 et $R_{21}$ est un radical alkyle en $C_5$ à $C_{20}$, alkylphényle en $C_5$ à $C_{20}$, alkylnaphtyle en $C_5$ à $C_{20}$ ou phényle ou naphtyle di- ou tri-substitué par un alkyle en $C_5$ à $C_{20}$; $R_{22}$ est un groupe méthylène, éthylène ou propylène;

f) un agent mouillant soluble dans l'eau qui est insoluble dans ce thiolcarbamate répondant à la formule développée;

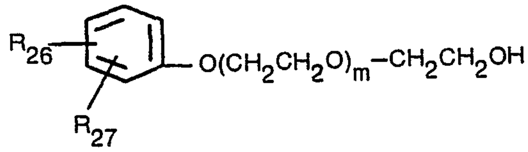

dans laquelle $R_{26}$ est un groupe alkyle en $C_7$ à $C_{12}$, $R_{27}$ est un groupe alkyle en $C_7$ à $C_{12}$ ou l'hydrogène et m est un entier de 50 à 150;

g) le lignosulfonate de calcium comme agent dispersant;

h) un agent anti-mousse;

i) des silices préparés par pyrogénation; et

j) de l'eau.

2. Composition herbicide suivant la revendication 1, dans laquelle:

a) le thiolcarbamate liquide est le N,N-diisobutylthiolcarbamate de S-éthyle;

b) la triazine est l'atrazine; et

c) l'antidote est le N,N-diallyldichloracétamide.

3. Composition herbicide suivant la revendication 1, dans laquelle:

a) le thiolcarbamate liquide est le N,N-diisobutylthiolcarbamate de S-éthyle,

b) la s-triazine est l'atrazine;

c) l'antidote est le N,N-diallyldichloroacétamide;

d) l'émulsionnant anionique est le dodécyl benzène sulfonate de calcium;

e) l'émulsionnant non ionique ou non ionique modifié répond à la formule développée

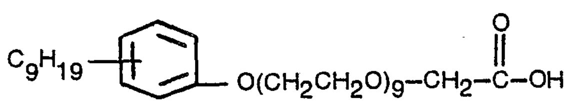 ou 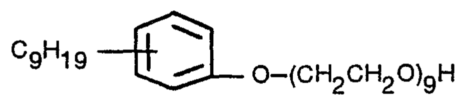

f) l'agent mouillant répond à la formule développée:

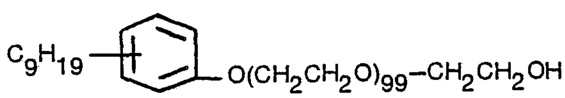 ou 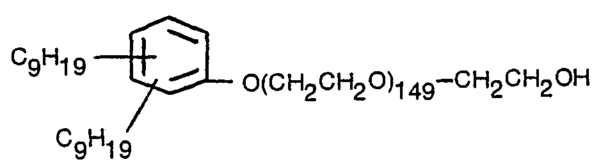

g) l'agent dispersant est le lignosulfonate de calcium;

h) un agent anti-mousse;

i) de la silice préparée par pyrogénation; et

j) de l'eau.

4. Composition herbicide suivant la revendication 1, dans laquelle l'émulsionnant non inoique ou non ionique modifié répond à la formule développée:

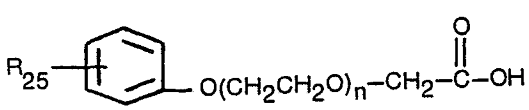 ou 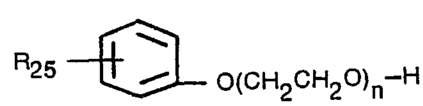

dans laquelle n est un entier de 7 à 14 et $R_{25}$ est un groupe alkyle en $C_7$ à $C_{12}$.